# EUROPÄISCHE PATENTSCHRIFT

(11) **EP 1 107 496 B1**
(45) Veröffentlichungstag und Bekanntmachung des Hinweises auf die Patenterteilung: **03.01.2007**
(21) Anmeldenummer: 00440303.6
(22) Anmeldetag: 22.11.2000
(51) Int. Cl.: H04J 14/02, H04L 7/00

(54) **Synchrones digitales Nachrichtenübertragungssystem**
Synchronous digital communication system
Système de communication numérique synchrone

(30) Priorität: 11.12.1999 DE 19959813
(43) Veröffentlichungstag der Anmeldung: 13.06.2001
(73) Patentinhaber: ALCATEL, 75008 Paris (FR)
(72) Erfinder: Wolf, Michael Joachim, Dr., 74395 Mundelsheim (DE)
(74) Vertreter: Menzietti, Domenico

(56) Entgegenhaltungen:
- PATENT ABSTRACTS OF JAPAN Bd. 0134, Nr. 04 (E-817), 7. September 1989 (1989-09-07) -& JP 01 144832 A (NEC CORP), 7. Juni 1989 (1989-06-07)
- POWELL W E ET AL: "SYNCHRONIZATION AND TIMING OF SDH NETWORKS" ELECTRICAL COMMUNICATION, ALCATEL. BRUSSELS, BE, 1993, Seiten 349-358, XP009031880 ISSN: 0013-4252
- LIN Y-K M ET AL: "PASSIVE OPTICAL SUBSCRIBER LOOPS WITH MULTIACCESS" JOURNAL OF LIGHTWAVE TECHNOLOGY, IEEE. NEW YORK, US, Bd. 7, Nr. 11, 1. November 1989 (1989-11-01), Seiten 1769-1777, XP000104012 ISSN: 0733-8724

## Beschreibung

Die Erfindung bezieht sich auf ein synchrones digitales Nachrichtenübertragungssystem gemäß dem Oberbegriff des Patentanspruchs 1 sowie auf ein Verfahren zum optischen Übertragen von elektrischen Signalen gemäß dem Oberbegriff des Patentanspruchs 6.

Ein synchrones digitales Nachrichtenübertragungssystem arbeitet z.B. gemäß einem Standard für synchrone digitale Hierarchie (SDH/SONET-Standard). In einem solchen digitalen Übertragungssystem sind einzelne Netzelemente durch unterschiedliche Übertragungsmedien (z.B. Kupferkabel, Lichtwellenleiter oder Funkstrecken) miteinander verbunden. Ein Netzelement ist z.B. eine Vermittlungsstelle für ein öffentliches Fernsprechnetz, ein Cross-Connect oder ein Add/Drop-Multiplexer. Zur Synchronisation der Netzelemente sind zwei Verfahren bekannt: Master/Slave-Synchronisation und gegenseitige Synchronisation.

Beim Master/Slave-Verfahren, auch hierarchische Synchronisation genannt, wird ein einziger, in einer Primär-Referenzquelle erzeugter Primär-Referenztakt zur Synchronisation der ersten Hierarchieebene von Netzelementen, auch Knoten genannt, verwendet. Diese Knoten übergeben ihre abgeleiteten Takte an die Knoten der nächsten Ebene und so weiter.

Die hierarchische Synchronisation in SDH-Netzen ist beispielsweise in dem Artikel "Synchronization and Timing of SDH Networks" von W.E. Powell et all, Alcatel Electrical Communication, 4. Quartal 1993, Seiten 349-358 beschrieben.

Beim Verfahren der gegenseitigen Synchronisation sind alle Knoten gleichwertig über die bestehenden digitalen Verbindungen miteinander verbunden. In jedem Knoten wird aus den eintreffenden Taktsignalen und dem eigenen internen Takt der mittlere Phasenwert berechnet.

Aus DE444651 1 ist bekannt, zur Vermeidung von Synchronisationsschleifen eine Synchronisationshierarchie festzulegen durch Einteilung der für die Synchronisierung verwendeten Schnittstelleneinrichtungen jedes Netzelements in zwei Klassen. In Schnittstelleneinrichtungen der einen Klasse werden empfangene Synchronisationssignale ignoriert, von den Schnittstelleneinrichtungen der anderen Klasse werden Synchronisationssignale (Taktreferenzen) ausgesandt.

In Patent Abstracts of Japan, Bd. 0134, Nr. 04 vom 07. Sept. 1989 ist in einer Zusammenfassung der Patentschrift JP01144832 ein System beschrieben, bei dem Datensignal, Taktsignal und Rahmentaktsignal in drei getrennten Wellenlöngenkanälen parallel über eine gemeinsame Lichtleiterstrecke übertragen werden. Dadurch kann auf Taktableitungsschaltungen für Bit- und Rahmentakt im Empfänger verzichtet werden.

Netzelemente haben mehrere Schnittstelleneinrichtungen, die in der Regel alle zum Empfang und Aussendung von Nachrichtensignalen, d.h. Sprache, Daten, etc. dienen. Einige, vordefinierte Schnittstelleneinrichtungen dienen zusätzlich dem Empfang und/oder der Aussendung von Synchronisationssignalen. Rein elektrische synchrone digitale Nachrichtenübertragungssysteme haben fest verschaltete physikalische Verbindungen. Eine Synchronisationshierarchie wird durch vorab festgelegte Pfade festgelegt. Bei der abschnittsweisen Verwendung von Funk oder optischer Übertragung im Punkt-zu-Punkt Verfahren werden die elektrischen Signale (Nachrichten + Synchronisation) transparent durchgeschalten. Die für die Synchronisation bestimmten Schnittstelleneinrichtungen der Netzelemente erhalten so stets die nötigen Synchronisationssignale. Selbst wenn zwischenzeitlich keine Nachrichten übertragen werden, werden die Verbindungen zwischen den Netzelementen aufrechterhalten, z.B. durch Aussendung von Default-Nachrichten, so dass eine kontinuierliche Synchronisation gewährleistet ist.

Eine neue Situation tritt ein, wenn bei der abschnittsweisen optischen Übertragung keine zeitlich unveränderbare Durchschaltung erfolgt. Optische Verbindungen sind nun nicht mehr fest Wellenlängen zugeordnet. Eine flexible und zeitlich varierbare Zuweisung von optischen Kanälen zu Wellenlängen ist möglich. Ein optischer Kanal zur Übertragung eines ersten Nachrichtenpakets wird z.B. über eine erste umschaltbare optische Verbindung unter Verwendung einer ersten Wellenlänge realisiert. Ein optischer Kanal zur Übertragung eines zweiten Nachrichtenpakets wird z.B. über eine zweite umschaltbare optische Verbindung unter Verwendung einer zweiten Wellenlänge realisiert. Werden in Verbindung mit Wellenlängenmultiplex Netzelemente mit Vermittlungseigenschaften eingesetzt, z.B. optische Cross-Connects, so können optische Kanäle beliebig und zeitlich variabel zur Übertragung von Nachrichtensignalen, z.B. SDH- oder SONET-Signalen eingerichtet werden. Eine erste optische Verbindung zur Einrichtung eines ersten optischen Kanals wird beispielsweise in einer ersten Zeitspanne zur Übertragung von Nachrichten von einem ersten Netzelement zu einem zweiten Netzelement genutzt, wobei zwischen die Netzelemente ein optischer Cross-Connect geschaltet ist. Die erste optische Verbindung wird z.B. unter Verwendung einer ersten Wellenlänge realisiert. Über die der ersten Wellenlänge zugeordnete Schnittstelleneinrichtung synchronisiert sich das zweite Netzelement. D.h. der Synchronisationstakt, der einem Bittakt entspricht, wird für alle Schnittstelleneinrichtungen des zweiten Netzelementes verwendet. Wenn nun in einer zweiten Zeitspanne die erste Wellenlänge durch den optischen Cross-Connect für eine zweite optische Verbindung zur Einrichtung eines zweiten optischen Kanals zur Übertragung von Nachrichten von dem ersten Netzelement zu einem dritten Netzelement verwendet wird, ist die Verbindung über die erste Wellenlänge zum zweiten Netzelement unterbrochen. Das zweite Netzelement kann sich in der zweiten Zeitspanne nicht mehr synchronisieren. Selbst wenn das zweite Netzelement über eine zweite oder dritte optische Verbindung Nachrichten- und/oder Synchronisationsignale empfangen würde, kann es sich dennoch nicht synchronisieren, da nur die der ersten Wellenlänge zugeordnete Schnittstelleneinrichtung zum Zwecke der Vornahme der Synchronisation für alle Schnittstelleneinrichtungen reserviert ist. Anstelle durch eine Schnittstelleneinrichtung kann die Synchronisation auch unter Verwendung von zwei oder drei Schnittstelleneinrichtungen, z.B. mittels einer zusätzlichen Auswahleinrichtung, die den qualitativ besten Takt auswählt, durchgeführt werden. Durch die Verwendung von drei Schnittstelleneinrichtungen für Zwecke der Synchronisation in Verbindung mit drei Wellenlängen kann zwar die Wahrscheinlichkeit, dass keine Synchronisation möglich ist minimiert, jedoch nicht ausgeschlossen werden.

Die Erfindung schlägt ein synchrones digitales Nachrichtenübertragungssystem gemäß Patentanspruch 1 und ein Verfahren zum optischen Übertragen von elektrischen Signalen gemäß Patentanspruch 6 vor.

Das erfindungsgemäße synchrones digitale Nachrichtenübertragungssystem dient zur optischen Übertragung von elektrischen Signalen. Die zu übertragenden elektrischen Signale werden elektrisch/optisch umgesetzt und im Wellenlängenmultiplex übertragen werden. Dazu wird WDM oder DWDM verwendet; WDM=Wavelength Division Multiplex, DWDM=Dense WDM. Mindestens eine optische Verbindung ist unter Verwendung mindestens einer Wellenlänge pro Übertragungsabschnitt zwischen optischen Netzelementen bzw. optischen und elektrischen Netzelementen fest verschaltet, d.h. nicht umschaltbar, und dient zur Übertragung von Synchronisations- und Nachrichtensignalen. Dies hat den Vorteil, dass unabhängig von den geschalteten Nachrichtenverbindungen stets eine Synchronisation im gesamten System gewährleistet ist. Jedes Netzelement hat zumindest eine Schnittstelleneinrichtung, die für die Synchronisation reserviert ist und die stets Signale über die für die Synchronisation reservierte Wellenlänge empfängt.

Das synchrone digitale Nachrichtenübertragungssystem beinhaltet z.B. mindestens drei jeweils mindestens einen Elektrisch/Optisch-Umsetzer und mindestens einen Optisch/Elektrisch-Umsetzer beinhaltende Netzelemente, die über optische Leitungen miteinander verbunden sind. Des weiteren ist mindestens ein optischer Cross-Connect vorgesehen, der zwischen die Netzelemente geschaltet ist. Jeder optische Cross-Connect ist geeignet, optische Verbindungen mit Ausnahme der mindestens einen fest verschalteten optischen Verbindung zur Weiterleitung von Signalen eines Netzelements zu einem anderen Netzelement zu verwenden. Der Cross-Connect führt Schaltoperationen für Nachrichtenverbindungen aus. Er ist aber bezüglich des Schaltens auf die vorhandenen Wellenlängen minus der für die Synchronisation fest verschalteten Wellenlängen beschränkt.

In einer bevorzugten Ausführungsform beinhaltet das synchrone digitale Übertragungssystem mindestens drei über optische Leitungen verbundene Netzelemente, die als SDH- oder SONET-Elemente ausgeführt sind. Zwischen den Netzelementen ist eine hierarchische Synchronisation durch feste Verschaltung mindestens einer optischen Verbindung zur Übertragung eines in einer Primär-Referenzquelle generierten Synchronisationstaktes und daraus abgeleitete Takte über vorgegebene Pfade eingerichtet. Beispielsweise wird ein in einem ersten Netzelement generierter Referenztakt zum Zwecke der Synchronisation über eine erste, reservierte und nicht umschaltbare Wellenlänge zu einem zweiten Netzelement übertragen. Ein im zweiten Netzelement aus dem empfangenen Referenztakt abgeleiteter Takt wird über eine zweite, reservierte und ebenfalls nicht umschaltbare Wellenlänge zu einem dritten Netzelement übertragen. Zwischen dem ersten und dem zweiten Netzelement ist dann die erste Wellenlänge für die Übertragung von Synchronisationssignalen reserviert, kann aber gleichzeitig für die Übertragung von Nachrichten, Maintenance- und/oder management-Signalen verwendet werden. Alle anderen verfügbaren Wellenlängen, z.B. zwanzig Stück, werden für die Übertragung von Nachrichtensignale über umschaltbare optische Verbindungen genutzt. Zwischen dem zweiten und dem dritten Netzelement ist dann die zweite Wellenlänge für die Übertragung von Synchronisationssignalen reserviert und kann zusätzlich für die Übertragung von Nachrichten verwendet werden. Unabhängig davon, ob Nachrichten über die zweite Wellenlänge übertragen werden, werden doch stets Synchronisationssignale übertragen. Alle anderen verfügbaren Wellenlängen, z.B. die erste und die dritte bis zwanzigste werden für die Übertragung der Nachrichtensignale über umschaltbare optische Verbindungen genutzt. Die Synchronisation im gesamten System ist garantiert.

Alternativ zur hierarchischen Synchronisation kann die Erfindung auch bei der gegenseitigen Synchronisation angewendet werden. Das synchrone digitale Übertragungssystem beinhaltet mindestens drei über optische Leitungen verbundene Netzelemente, die als SDH- oder SONET-Elemente ausgeführt sind. Zwischen den Netzelementen wird das Verfahren der gegenseitigen Synchronisation durch feste Verschaltung mindestens einer optischen Verbindung zur Übertragung mindestens eines in mindestens einer Primär-Referenzquelle generierten Synchronisationstaktes über vorgegebene Pfade eingerichtet. Die Pfade im System werden vorab bestimmt. Dazu ist beispielsweise darauf zu achten, dass keine Synchronisationsschleifen entstehen können. In den einzelnen Pfaden ist jeweils mindestens eine ausgewählte Wellenlänge für die Übertragung von Synchronisationssignalen vorgesehen. Auf jeder für die Synchronisationsverteilung genutzte Strecke zwischen zwei Netzelementen gibt es somit mindestens eine nicht umschaltbare optische Verbindung, die für Synchronisationszwecke dient, und zusätzlich zur Nachrichten-, Maintenance- und/oder Management-Signal-Übertragung verwendet werden kann.

In einer weiteren bevorzugten Ausführungsform der Erfindung sind in dem synchronen digitalen Übertragungssystem mindestens drei über optische Leitungen verbundene Netzelemente vorgesehen sowie ein Synchronisations-Manager und ein Connection-Manager. Der Synchronisations-Manager ist geeignet, dedizierte, nicht umschaltbare Synchronisationsverbindungen zwischen den mindestens drei Netzelementen zu konfigurieren. Der Connection-Manager ist geeignet ist, aus einem Pool von optischen Verbindungen, in denen die dedizierten Synchronisationsverbindungen markiert sind, Nachrichtenverbindungen zu konfigurieren ohne die Synchronisationsverbindungen umzuschalten.

Synchronisations-Manager und Connection-Manager dienen als Netzwerk-Management. Bei der Systemplanung werden die Anzahl der Netzelemente, die Anzahl der möglichen Verbindungen, etc. ermittelt. Für die Synchronisation wird im Synchronisations-Manager eine Topologie entworfen. Beispielsweise wird eine Master/Slave-Synchronisation. Für die Implementierung dieser Synchronisation werden die nötigen Pfade ermittelt. Für jeden Pfad wird eine fest verschaltete, d.h. nicht umschaltbare optische Verbindung unter Verwendung mindestens einer Wellenlänge konfiguriert. In jedem Netzelement wird mindestens ein Schnittstellenelement für die Synchronisation ausgewählt. Den ausgewählten Schnittstellenelementen wird jeweils eine für Synchronisationszwecke fest verschaltete Wellenlänge zugeordnet. Diese Wellenlänge und der zugehörige Pfad werden derart konfiguriert, dass ein nicht umschaltbarer Pfad eingerichtet wird, über den stetig Synchronisationssignale übertragen werden. Nach Abschluss der Konfigurierung der Synchronisationsverbindungen erfolgt das Konfigurieren der Nachrichtenverbindungen. Nachrichten werden über geschaltete Nachrichtenverbindungen übertragen und können zusätzlich über die Synchronisationsverbindungen übertragen werden. Die für die Synchronisationsverbindungen reservierten Wellenlängen sind für den Connection-Manager nur eingeschränkt benutzbar, da sie nicht umschaltbar sind.

Beim erfindungsgemäßen Verfahren zum optischen Übertragen von elektrischen Signalen werden die zu übertragenden elektrischen Signale elektrisch/optisch umgesetzt und im Wellenlängenmultiplex übertragen, wobei unter Verwendung mindestens einer Wellenlänge mindestens eine optische Verbindung fest verschaltet ist und zur stetigen Übertragung von Synchronisationssignalen dient, und unter Verwendung mindestens einer weiteren Wellenlänge mindestens eine weitere optische Verbindung umschaltbar ist. Jede umschaltbare, optische Verbindung wird zur Übertragung von Nachrichtensignalen genutzt. Das Verfahren kann angewendet werden in einem synchronen Nachrichtenübertragungssystem mit mindestens drei über optische Leitungen verbundene Netzelemente.

Dedizierte, nicht umschaltbare Synchronisationsverbindungen sind dann zwischen den mindestens drei Netzelementen zur permanenten Übertragung mindestens eines Synchronisationstaktes geschaltet.

Im folgenden wird die Erfindung anhand eines Ausführungsbeispiels unter Zuhilfenahme zweier Figuren erläutert. Es zeigen:
- Fig.1: eine schematische Darstellung eines erfindungsgemäßen synchronen digitalen Nachrichtenübertragungssystems und
- Fig.2: eine schematische Darstellung eines Ausschnitts des Netzelementes NE1 aus Fig. 1.

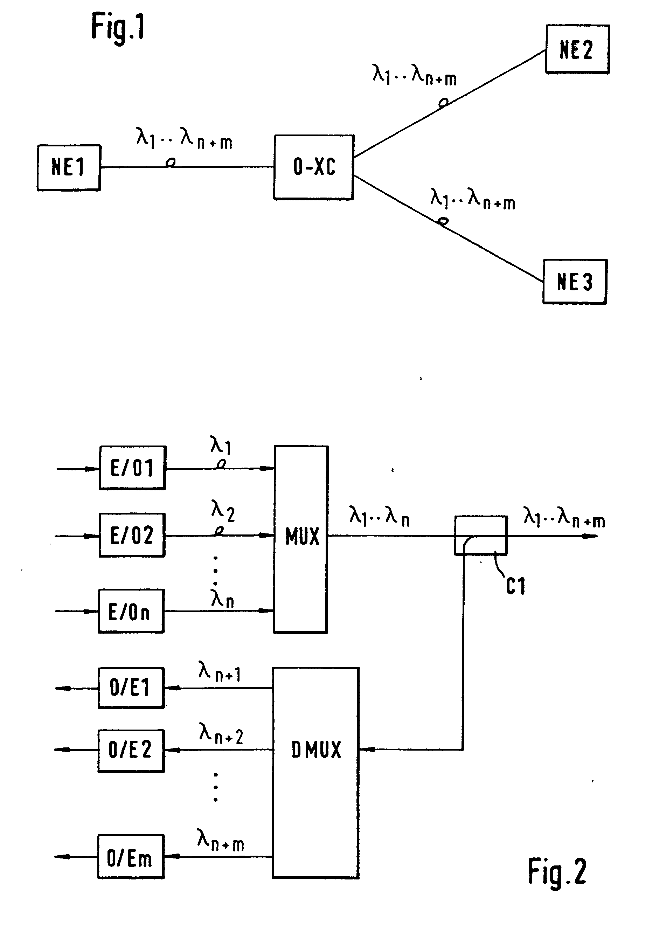

Das Ausführungsbeispiel wird nun zunächst unter Zuhilfenahme von Fig. 1 erläutert. Fig. 1 zeigt ein synchrones digitales Nachrichtenübertragungssystem. Das Nachrichtenübertragungssystem beinhaltet drei Netzelemente NE1, NE2, NE3, die über optische Leitungen miteinander verbunden sind. Zwischen die Netzelemente NE1, NE2, NE3 ist ein optischer Cross-Connect O-XC geschaltet. Über die optischen Leitungen, die z.B. aus optischen Glasfaserleitungen aufgebaut sind werden optische Signale im Wellenlängenmultiplex (WDM) oder DWDM übertragen. Es sind n+m Wellenlängen vorgesehen. Das Nachrichtenübertragungssystem ist als bidirektionales Übertragungssystem ausgeführt. Die Wellenlängen λ₁ bis λₙ sind für die Übertragung von Signalen von Netzelement NE1 zu den Netzelementen NE2, NE3 vorgesehen. Die Wellenlängen λₙ₊₁ bis λₙ₊ₘ sind für die Übertragung von Signalen von den Netzelementen NE2, NE3 zu Netzelement NE1 vorgesehen; n und m sind natürliche Zahlen, beispielsweise n=20, m=20.

Das Nachrichtensystem stellt die Minimalversion eines Nachrichtensystems dar, das WDM über geschaltete optische Verbindungen ermöglicht. Die Erfindung ist auch auf einfache Art und Weise auf Übertragungssysteme mit mehr als drei Netzelementen, z.B. eintausend, anwendbar, die z.B. über ein Maschennetz aus optischen Cross-Connectoren und Add/Drop-Multiplexern miteinander verbunden sind. Generell ist die Erfindung auf jedes synchrone Übertragungssystem anwendbar, das mindestens drei elektrische Teilnetze über ein optisches Teilnetz derart miteinander verbindet, dass umschaltbare optische Verbindungen möglich sind.

Das Ausführungsbeispiel wird nun weiter unter Zuhilfenahme von Fig. 2 erläutert. Fig. 2 zeigt einen Ausschnitt aus Netzelement NE1 aus Fig. 1. Netzelement NE1 beinhaltet n Elektrisch/Optisch-Umsetzer E/O1, E/O2, ..., E/On und m Optisch/Elektrisch-Umsetzer O/E1, O/E2, ..., O/Em. Die n Elektrisch/Optisch-Umsetzer E/O1, E/O2, ..., E/On dienen dazu, die über die Schnittstelleneinrichtungen des Netzelementes NE1 ausgesendeten und über das optische Netz zu übertragenden elektrischen Signale elektrisch/optisch umzusetzen. Die erste Schnittstelleneinrichtung ist dazu mit dem Elektrisch/Optisch-Umsetzer E/O1 verbunden und ihm fest zugeordnet, die zweite Schnittstelleneinrichtung mit dem Elektrisch/Optisch-Umsetzer E/O2, usw. Jeder Elektrisch/Optisch-Umsetzer E/O1, E/O2, ..., E/On generiert eine andere Wellenlänge. Alle Wellenlängen λ₁ bis λₙ werden in einem z.B. als optischen Combiner ausgeführten Multiplexer MUX zusammengefaßt. Die überlagerten Wellenlängen werden gemeinsam über das optische Netz übertragen. Der optische Cross-Connect schaltet optische Verbindungen und leitet die den optischen Verbindungen zugeordneten Wellenlängen entsprechend ihrer Zieladresse weiter. Sollen z.B. Nachrichten über zwei optische Kanäle zum Netzelement NE2 weitergeleitet werden, so werden dazu z.B. die Wellenlängen λ₂ bis λ₃ benutzt, die dann zum Netzelement NE2 weitergeleitet werden, indem der optische Cross-Connect O-XC diese Wellenlängen entsprechend durchschaltet. Sollen z.B. Nachrichten über zwei weitere optische Kanäle zum Netzelement NE3 weitergeleitet werden, so werden z.B. die Wellenlängen λ₄ bis λ₅ dazu benutzt und der optische Cross-Connect O-XC schaltet diese Wellenlängen entsprechend durch. In einer weiteren Zeitspanne können z.B. Nachrichten über die Wellenlängen λ₂ und λ₅ zum Netzelement NE3 weitergeleitet werden sowie über die Wellenlängen λ₃ bis λ₄ zum Netzelement NE3. Um die Synchronisation im Netz stetig zu gewährleisten ist eine nicht umschaltbare optische Verbindung, z.B. durch Reservierung der Wellenlänge λ₁ zur permanenten Übertragung von Synchronisationssignalen, eingerichtet. Für die Wellenlänge λ₁ wird eine nicht umschaltbare, optische Verbindung konfiguriert. Dem Elektrisch/Optisch-Umsetzer E/O1 wird ein in einer Primär-Referenzquelle generierter Synchronisationstakt zugeführt. Der Synchronisationstakt wird über die reservierte Wellenlänge λ₁ Netzelement NE2 zugeführt. Alternativ kann der Synchronisationstakt auch über die reservierte Wellenlänge λ₁ zum optischen Cross-Connect O-XC übertragen werden, der die reservierte optische Verbindung über eine andere Wellenlänge, z.B. Wellenlänge λ₅ zum Netzelement NE2 durchschaltet und so den Synchronisationstakt zu Netzelement NE2 weiterleitet. Netzelemente NE2 synchronisiert sich auf den empfangenen Takt. Der Synchronisationstakt kann zusätzlich über eine zweite reservierte Wellenlänge Netzelement NE3 zugeführt werden. Netzelement NE3 synchronisiert sich dann auf den über die zweite reservierte Wellenlänge empfangenen Synchronisationstakt.

Netzelement NE1 empfängt Nachrichten von Netzelementen NE2 und NE3 über eine optische Auskoppelvorrichtung C1 und einen Demultiplexer DMUX, der einzelne Wellenlängen selektiert und an die Optisch/Elektrisch-Umsetzer O/E1, O/E2, ..., O/Em weiterleitet. Die Auskoppelvorrichtung C1 koppelt alle Wellenlängen λₙ₊₁ bis λₙ₊ₘ aus der optischen Glasfaser aus; n und m können auch unterschiedliche Werte aufweisen. Der Demultiplexer DMUX ist beispielsweise als wellenlängenabhängiger Splitter ausgeführt. Jeder Optisch/Elektrisch-Umsetzer O/E1, O/E2, ..., O/Em setzt eine andere Wellenlänge um und leitet das entsprechende elektrische Signal an eine Schnittstelleneinrichtung des Netzelementes NE1 weiter. Beim Master/Slave-Verfahren (hierarchische Synchronisation) können alle Wellenlängen λₙ₊₁ bis λₙ₊ₘ zur Übertragung von Nachrichtensignalen genutzt werden. Bei der gegenseitigen Synchronisation sind beispielsweise die Wellenlängen λₙ₊₁ und λₙ₊₂ für die Synchronisationssignale von Netzelement NE2 bzw. NE3 reserviert und fest verschaltet, und können daher nur eingeschränkt für Nachrichtenübertragungen von den Netzelementen NE2 bzw. NE3 zu Netzelement NE1 genutzt werden; die übrigen Wellenlängen λₙ₊₃ bis λₙ₊ₘ können dann für die Übertragung von Nachrichten über beliebig geschaltete, optische Verbindungen genutzt werden.

Bei der gegenseitigen Synchronisation sind beispielsweise zwei, drei oder vier Schnittstelleneinrichtungen des Netzelementes NE1 für Synchronisationszwecke reserviert und Elektrisch/Optisch-Umsetzer bzw. Optisch/Elektrisch-Umsetzern fest zugeordnet. Eine Auswahl des zu verwendeten Synchronisationstaktes erfolgt z.B. nach Priorität oder nach qualitativ höherwertigem Empfang.

## Patentansprüche

1. Synchrones digitales Nachrichtenübertragungssystem zur optischen Übertragung von elektrischen Signalen, bei dem die zu übertragenden elektrischen Signale elektrisch/optisch (E/O1, E/O2, E/On) umgesetzt und im Wellenlängenmultiplex übertragen werden,
**dadurch gekennzeichnet,**
**dass** unter Verwendung mindestens einer Wellenlänge (λ₁) mindestens eine optische Verbindung fest verschaltet ist und zur stetigen Übertragung von Synchronisationssignalen dient, und dass unter Verwendung mindestens einer weiteren Wellenlänge (λ₂, λₙ) mindestens eine weitere optische Verbindung durch Schalten der entsprechenden Wellenlänge (λ₂, λₙ) optisch umschaltbar ist, die zur Übertragung von Nachrichten dient.

2. Übertragungssystem nach Anspruch 1, **dadurch gekennzeichnet, dass** mindestens drei jeweils mindestens einen Elektrisch/Optisch-Umsetzer (E/O1, E/O2, E/On) und mindestens einen Optisch/Elektrisch-Umsetzer (O/E1, O/E2, O/Em) beinhaltende Netzelemente (NE1, NE2, NE3) über optische Leitungen miteinander verbunden sind, dass mindestens ein optischer Cross-Connect (O-XC) zwischen die Netzelemente (NE1, NE2, NE3) geschaltet ist, und dass der mindestens eine optische Cross-Connect (O-XC) geeignet ist, einzelne Wellenlängen (λ₂, λₙ) mit Ausnahme der mindestens einen, fest verschalteten Wellenlänge (λ₁) zur geschalteten Weiterleitung von Nachrichtensignalen eines Netzelements (NE1, NE2, NE3) zu einem anderen Netzelement (NE1, NE2, NE3) zu verwenden.

3. Übertragungssystem nach Anspruch 1, **dadurch gekennzeichnet, dass** mindestens drei über optische Leitungen verbundene Netzelemente (NE1, NE2, NE3) vorgesehen sind, dass die Netzelemente (NE1, NE2, NE3) SDH- oder SONET-Elemente sind, und dass zwischen den Netzelementen (NE1, NE2, NE3) eine hierarchische Synchronisation durch die mindestens eine fest verschaltete optische Verbindung zur Übertragung eines in einer Primär-Referenzquelle generierten Synchronisationstaktes und daraus abgeleitete Takte über vorgegebene Pfade eingerichtet ist.

4. Übertragungssystem nach Anspruch 1, **dadurch gekennzeichnet, dass** mindestens drei über optische Leitungen verbundene Netzelemente (NE1, NE2, NE3) vorgesehen sind, dass die Netzelemente (NE1, NE2, NE3) SDH- oder SONET-Elemente sind, und dass zwischen den Netzelementen (NE1, NE2, NE3) ein Verfahren der gegenseitigen Synchronisation durch die mindestens eine fest verschaltete optische Verbindung zur Übertragung mindestens eines in mindestens einer Primär-Referenzquelle generierten Synchronisationstaktes über vorgegebene Pfade eingerichtet ist.

5. Übertragungssystem nach Anspruch 1, **dadurch gekennzeichnet, dass** mindestens drei über optische Leitungen verbundene Netzelemente (NE1, NE2, NE3) vorgesehen sind, dass ein Synchronisations-Manager und ein Connection-Manager vorgesehen sind, dass der Synchronisations-Manager geeignet ist, über die mindestens eine fest verschaltete optische Verbindung dedizierte Synchronisationsverbindungen zwischen den mindestens drei Netzelementen (NE1, NE2, NE3) zu konfigurieren, und dass der Connection-Manager geeignet ist, aus einem Pool von optischen Verbindungen, in denen die dedizierten Synchronisationsverbindungen markiert sind, Nachrichtenverbindungen zu konfigurieren ohne die Synchronisationsverbindungen umzuschalten.

6. Verfahren zum optischen Übertragen von elektrischen Signalen, bei dem die zu übertragenden elektrischen Signale elektrisch/optisch (E/O1, E/O2, E/On) umgesetzt werden und im Wellenlängenmultiplex übertragen werden,
**dadurch gekennzeichnet,**
**dass** unter Verwendung mindestens einer Wellenlänge (λ₁) mindestens eine optische Verbindung fest verschaltet ist und zur stetigen Übertragung von Synchronisationssignalen dient, und dass unter Verwendung mindestens einer weiteren Wellenlänge (λ₂, λₙ) mindestens eine weitere optische Verbindung durch Schalten der entsprechenden Wellenlänge (λ₂, λₙ) optisch umschaltbar ist, die zur Übertragung von Nachrichtensignalen dient.

7. Verfahren nach Anspruch 6, **dadurch gekennzeichnet, dass** in einem synchronen Nachrichtenübertragungssystem mit mindestens drei über optische Leitungen verbundene Netzelemente (NE1, NE2, NE3) über die mindestens eine fest verschaltete optische Verbindung dedizierte, nicht umschaltbare Synchronisationsverbindungen zwischen den mindestens drei Netzelementen (NE1, NE2, NE3) zur permanenten Übertragung mindestens eines Synchronisationstaktes geschaltet sind.

## Claims

1. Synchronous digital telecommunications system for optically transmitting electrical signals, in which the electrical signals to be transmitted are electrically/optically converted (E/O1, E/02, E/On) and transmitted in wavelength division multiplex
**characterised in that**
at least one optical connection is constantly connected using at least one wavelength (λ₁) and is used for continuously transmitting synchronisation signals, and **in that** using at least one further wavelength (λ₂, λₙ), at least one further optical connection which is used for transmitting information can be switched over optically by switching the corresponding wavelengths (λ₂, λₙ).

2. Transmission system according to Claim 1, **characterised in that** at least three network elements (NE1, NE2, NE3) each containing at least one electrical/optical converter (E/O1, E/O2, E/On) and at least one optical/electrical converter (O/E1, O/E2, O/Em) are connected to one another via optical lines, **in that** at least one optical cross-connect (O-XC) is connected between the network elements (NE1, NE2, NE3), and **in that** the at least one optical cross-connect (O-XC) is suitable for using individual wavelengths (λ₂, λₙ) except for the at least one constantly connected wavelength (λ₁) for the switched routing of information signals from one network element (NE1, NE2, NE3) to another network element (NE1, NE2, NE3).

3. Transmission system according to Claim 1, **characterised in that** at least three network elements (NE1, NE2, NE3) connected via optical lines are provided, **in that** the network elements (NE1, NE2, NE3) are SDH or SONET elements, and **in that** hierarchical synchronisation is set up between the network elements (NE1, NE2, NE3) by the at least one constantly connected optical connection for transmitting a synchronisation clock generated in a primary reference source and clocks derived therefrom via predetermined paths.

4. Transmission system according to Claim 1, **characterised in that** at least three network elements (NE1, NE2, NE3) connected via optical lines are provided, **in that** the network elements (NE1, NE2, NE3) are SDH or SONET elements, and **in that** a method for mutual synchronisation is set up between the network elements (NE1, NE2, NE3) by the at least one constantly connected optical connection for transmitting at least one synchronisation clock generated in at least one primary reference source via predetermined paths.

5. Transmission system according to Claim 1, **characterised in that** at least three network elements (NE1, NE2, NE3) connected via optical lines are provided, **in that** a synchronisation manager and a connection manager are provided, **in that** the synchronisation manager is suitable for configuring dedicated synchronisation connections between the at least three network elements (NE1, NE2, NE3) via the at least one constantly connected optical connection, and **in that** the connection manager is suitable for configuring information connections from a pool of optical connections, in which the dedicated synchronisation connections are marked, without switching over the synchronisation connections.

6. Method for optically transmitting electrical signals, in which the electrical signals to be transmitted are electrically/optically converted (E/O1, E/O2, E/On) and transmitted in wavelength division multiplex
**characterised in that**
at least one optical connection is constantly connected using at least one wavelength (λ₁) and is used for continuously transmitting synchronisation signals, and **in that** using at least one further wavelength (λ₂, λₙ), at least one further optical connection which is used for transmitting information signals can be switched over optically by switching the corresponding wavelengths (λ₂, λₙ).

7. Method according to Claim 6, **characterised in that** in a synchronous telecommunications system having at least three network elements (NE1, NE2, NE3) connected via optical lines, dedicated non-switchable synchronisation connections are connected between the at least three network elements (NE1, NE2, NE3) via the at least one constantly connected optical connection for permanently transmitting at least one synchronisation clock.

## Revendications

1. Système de communication numérique synchrone pour la transmission de signaux électriques, dans lequel les signaux électriques à transmettre sont convertis de la forme électrique à la forme optique (E/O1, E/O2, E/On) et transmis par multiplexage en longueurs d'onde,
**caractérisé en ce**
**qu'**au moins une liaison optique est connectée de manière permanente en utilisant au moins une longueur d'onde (λ₁) et sert à transmettre en permanence des signaux de synchronisation, et qu'au moins une autre liaison optique est, en utilisant au moins une autre longueur d'onde (λ₂,λₙ), optiquement commutable par commutation de la longueur d'onde (λ₂,λₙ) correspondante, cette liaison servant à transmettre des messages.

2. Système de communication selon la revendication 1, **caractérisé en ce qu'**au moins trois éléments de réseau (NE1, NE2, NE3) comprenant respectivement au moins un convertisseur électro-optique (E/O1, E/O2, E/On) et au moins un convertisseur opto-électrique (O/E1, O/E2, O/Em), sont reliés entre eux par l'intermédiaire de liaisons optiques, qu'au moins un répartiteur optique (O-XC) est connecté entre les éléments de réseau (NE1, NE2, NE3), et que ce répartiteur optique (O-XC) au moins en présence est adapté à utiliser les différentes longueurs d'onde (λ₂,λₙ), à l'exception de la longueur d'onde (λ₁) au moins en présence qui est connectée de façon permanente pour la transmission de signaux de communication d'un élément de réseau (NE1, NE2, NE3) à un autre élément de réseau (NE1, NE2, NE3).

3. Système de communication selon la revendication 1, **caractérisé en ce que** sont prévus au moins trois éléments de réseau (NE1, NE2, NE3) reliés entre eux par l'intermédiaire de liaisons optiques, que les éléments de réseau (NE1, NE2, NE3) sont des éléments SDH ou SONET, et qu'une synchronisation hiérarchique est établie, entre les éléments de réseau (NE1, NE2, NE3), par au moins la liaison optique connectée de manière permanente pour la transmission, via des chemins prédéfinis, d'une horloge de synchronisation générée dans une source de référence primaire, et des horloges en dérivant.

4. Système de communication selon la revendication 1, **caractérisé en ce que** sont prévus au mois trois éléments de réseau (NE1, NE2, NE3) reliés entre eux par l'intermédiaire de liaisons optiques, que les éléments de réseau (NE1, NE2, NE3) sont des éléments SDH ou SONET, et qu'un procédé de synchronisation mutuelle est établi, entre les éléments de réseau (NE1, NE2, NE3), par la liaison optique permanente au moins en présence qui est connectée pour la transmission, via des chemins prédéfinis, d'au moins une horloge de synchronisation générée dans au moins une source de référence primaire.

5. Système de communication selon la revendication 1, **caractérisé en ce que** sont prévus au mois trois éléments de réseau (NE1, NE2, NE3) reliés entre eux par l'intermédiaire de liaisons optiques, qu'un gestionnaire de synchronisation et un gestionnaire de connexion sont prévus, que le gestionnaire de synchronisation est adapté à configurer, via la liaison optique permanente au moins en présence, des liaisons de synchronisation dédiées entre les trois éléments de réseau (NE1, NE2, NE3) au moins en présence, et que le gestionnaire de connexion est adapté à configurer des liaisons de communication à partir d'un pool de liaisons optiques dans lesquelles les liaisons de synchronisation sont marquées, et ce sans commuter les liaisons de synchronisation.

6. Procédé pour la transmission optique de signaux électriques, dans lequel les signaux électriques à transmettre sont convertis de la forme électrique à la forme optique (E/O1, E/O2, E/On) et transmis par multiplexage en longueurs d'onde,
**caractérisé en ce**
**qu'**au moins une liaison optique est connectée de manière permanente en utilisant au moins une longueur d'onde (λ₁) et sert à transmettre en permanence des signaux de synchronisation, et qu'au moins une autre liaison optique est, en utilisant au moins une autre longueur d'onde (λ₂,λₙ), optiquement commutable par commutation de la longueur d'onde (λ₂,λₙ) correspondante, cette liaison servant à transmettre des messages.

7. Procédé selon la revendication 6, **caractérisé en ce que**, dans un système de communication synchrone comprenant au moins trois éléments de réseau (NE1, NE2, NE3) reliés entre eux par l'intermédiaire de liaisons optiques, des liaisons de synchronisation dédiées et non commutables sont établies entre les trois éléments de réseau (NE1, NE2, NE3) au moins en présence, via la liaison optique permanente au moins en présence pour la transmission permanente d'au moins une horloge de synchronisation.
